# EUROPEAN PATENT SPECIFICATION

(11) **EP 1 474 976 B1**
(45) Date of publication and mention of the grant of the patent: **24.05.2006**
(21) Application number: 03257913.8
(22) Date of filing: 16.12.2003
(51) Int. Cl.: A21B 7/00

(54) **Bread maker**
Brotbackgerät
Appareil de cuisson de pain

(30) Priority: 07.05.2003 KR 2003029125
(43) Date of publication of application: 10.11.2004
(73) Proprietor: SAMSUNG ELECTRONICS CO., LTD., Suwon-City, Kyungki-do (KR)
(72) Inventor: Sung, Han-jun, Paldal-ku Suwon city Kyungki-do (KR); Kwon, Yung-hyun, Paldal-ku Suwon city Kyungki-do (KR); Kim, Chul, Dongan-ku Anyang city Kyungki-do (KR); Lee, Tae-uk, Changan-ku Suwon city Kyungki-do (KR); Park, Jae-ryong, Paldal-ku Suwon city Kyungki-do (KR); Lee, Jang-woo, Suwon city Kyungki-do (KR); Lim, Dong-bin, Paldal-ku Suwon city Kyungki-do (KR)
(74) Representative: Brandon, Paul Laurence

(56) References cited:
- US-A- 4 803 086
- US-A- 5 146 840
- US-A- 5 532 456

## Description

The present invention relates to bread makers, and more particularly, but not exclusively to bread makers having an improved combination structure of a main body and an oven.

The conventional bread maker developed thus far allows a user to easily and conveniently make the bread by automatically performing a series of baking processes.

A conventional bread maker typically comprises: a main body having an oven compartment, an oven accommodated in the oven compartment of the main body, a heater to heat the inside of the oven, and a door provided in the front of the main body to allow opening and closing of the oven compartment.

However, design of the conventional bread maker's combination structure of the main body and the oven has focused solely on combining the main body with the oven, and the design has not considered the fact that the combination structure can affect humidity, temperature, heat transmission, etc. during a baking process.

Therefore, while using the conventional bread maker, it is difficult to maintain a stable baking condition, and durability of the bread maker decreases in cases where problems arise in the combination structure of the main body and the oven.

Further, while using the conventional bread maker, there is no insulation provided between the main body and the oven. Therefore, loss of heat, loss of electricity, and accidents caused due to a current leakage are likely to occur.

US-A-5 532 456 discloses a bread maker according to the pre-characterising portion of claim 1.

Accordingly, it is an aim of preferred embodiments of the present invention to provide a bread maker in which the main body and the oven are securely combined, and loss of heat and loss of electricity are effectively reduced.

According to the present invention in a first aspect, there is provided a bread maker comprising: a main body having an oven compartment; an oven including a rear part and a side part accommodated in the oven compartment; characterised in that the bread maker further comprises a spacing part provided between the main body and the oven to form a space between the main body and the oven; and an insulation member interposed in the space between the main body and the oven.

Suitably, the spacing part protrudes towards the rear part of the oven to form the space in which the insulation member is interposed, and includes at least one first protruding part formed with a first screw hole; and at least one first screw passing through the main body and inserted into the first screw hole of the first protruding part.

Suitably, the spacing part protrudes towards the side part of the oven to form the space in which the insulation member is interposed, and includes at least one second protruding part formed with a second screw hole; and at least one second screw passing through the main body and inserted into the second screw hole of the second protruding part.

Suitably, the spacing part protrudes towards the rear part of the oven to form the space in which the insulation member is interposed, and includes at least one first bracket formed with a first screw hole; and at least one first screw passing through the main body and inserted into the first screw hole of the first bracket.

Suitably, the spacing part protrudes towards the side part of the oven to form the space in which the insulation member is interposed, and includes at least one second bracket formed with a second screw hole; and at least one second screw passing through the main body and inserted into the second screw hole of the second bracket.

Further features of the present invention are set out in the appended claims.

The present invention will become apparent and more readily appreciated from the following description of the embodiments, by way of example only, taken in conjunction with the accompany drawings of which:
FIG. 1 is a perspective view of a bread maker according to an aspect of the present invention;
FIG. 2 is a perspective view of the bread maker with a door open;
FIG. 3 is an exploded perspective view of a main body and an oven of a bread maker;
FIG. 4 is a combined perspective view of the main body and the oven of FIG. 3;
FIGS. 5A and 5B are partial sectional views to illustrate a combination structure of the main body and the oven of the bread maker according to one embodiment of the present invention; and
FIGS. 6A and 6B are partial sectional views to illustrate a combination structure of the main body and the oven of the bread maker according to another embodiment of the present invention.

Reference will now be made in detail to the embodiments of the present invention, examples of which are illustrated in the accompanying drawings, wherein like reference numerals refer to like elements throughout.

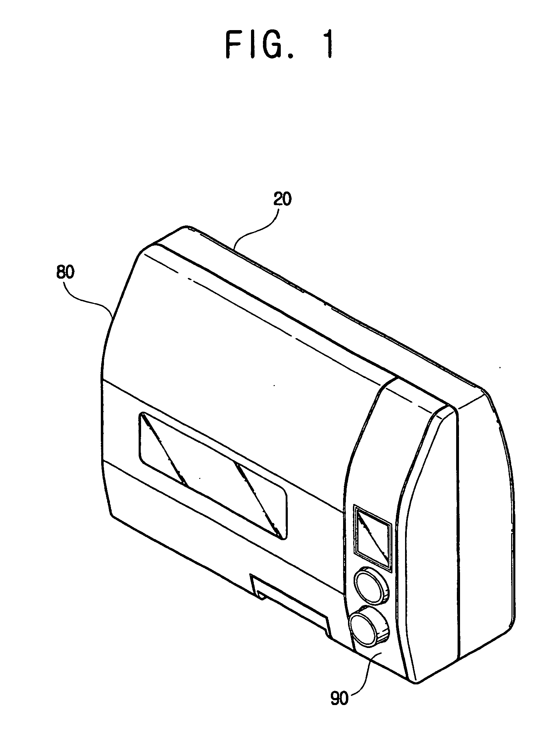

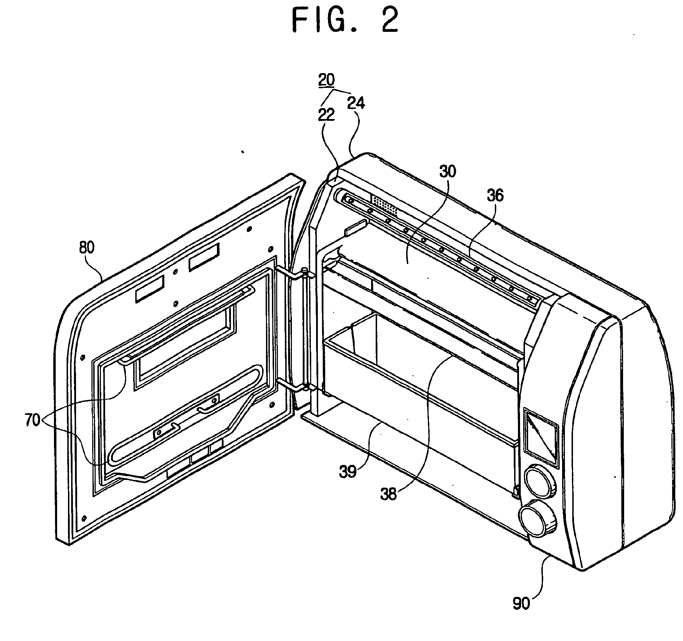

As shown in FIGS. 1 and 2, a bread maker according to an aspect of the present invention comprises: a main body 20, an oven 30 accommodated in the main body 20, a plurality of heaters 70 to heat the inside of the oven 30, and a door 80 provided in the front of the main body 20 to open and close the oven 30.

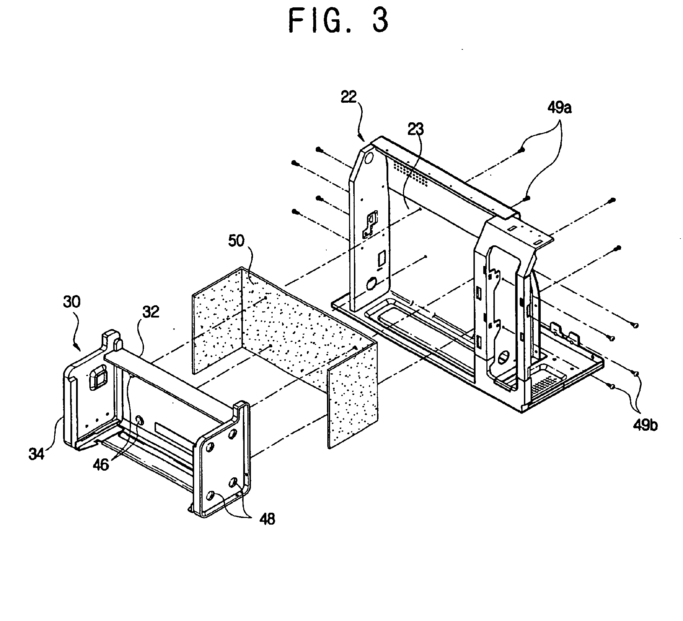

The main body 20 includes: a frame 22 forming an oven compartment 23, as shown in FIG. 3, in which the oven 30 is accommodated; a frame cover 24, as shown in FIG. 2, to cover the outside of the frame 22, and a control panel 90, as shown in FIG. 1, provided in a front side of the main body 20 to allow a user to control the bread maker and to view an operating state of the bread maker.

In upper and lower sides of the oven 30 are provided an upper kneading drum (not shown) and a lower kneading drum (not shown), which are disposed parallel to each other and alternate clockwise and counterclockwise rotations. On the upper kneading drum 36 and the lower kneading drum are wound opposite ends of a mixing bag (not shown) filled with the ingredients for the bread, respectively. Between the upper kneading drum 36 and the lower kneading drum is provided a pair of dough-blocking members 38 to prevent dough from being kneaded in the mixing bag from moving towards the upper kneading drum 36. Further, inside the oven 30 is provided a baking tray 39 shaped like a box with a top opening to contain the completely kneaded dough. The baking tray 39 is preferably made of aluminum, steel, or other material that has good heat-resisting property.

The door 80 is rotatably combined to the main body 20 to selectively open and close a front opening of the oven 30.

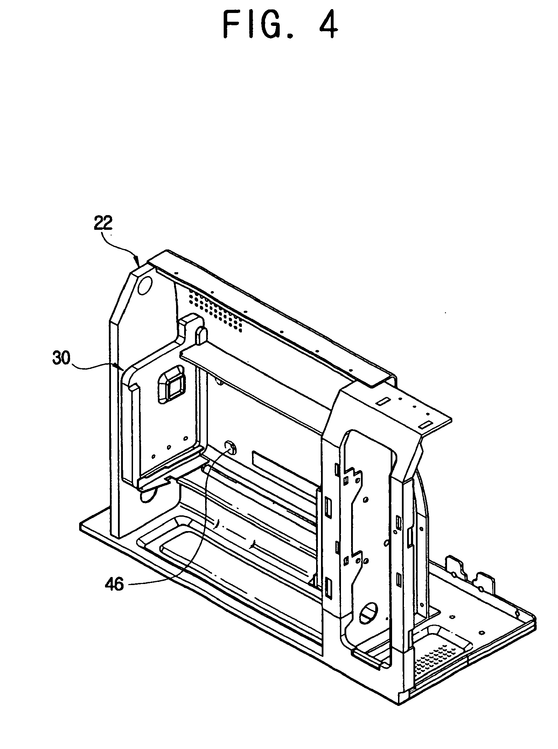

In FIGS. 3, 4, 5A and 5B, a spacing part 40 is provided between the frame 22 and the oven 30 used to combine the frame 22 with the oven 30 and to form a predetermined space to interpose an insulation member 50 therebetween.

The frame 22 forms the oven compartment 23 in which the oven 30 is accommodated, and the oven 30 comprises a rear part 32 and a side part 34.

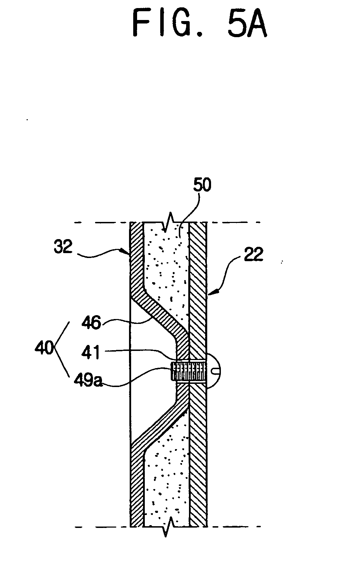

As shown in FIG. 5A, on the rear part 32 of the oven 30, the spacing part 40 protrudes towards the frame 22 to form a space in which the insulation member 50 is placed, where the spacing part 40 includes at least one first protruding part 46 formed with a first screw hole 41, and at least one first screw 49a passing through the frame 22 and inserted into the first screw hole 41 of the first protruding part 46.

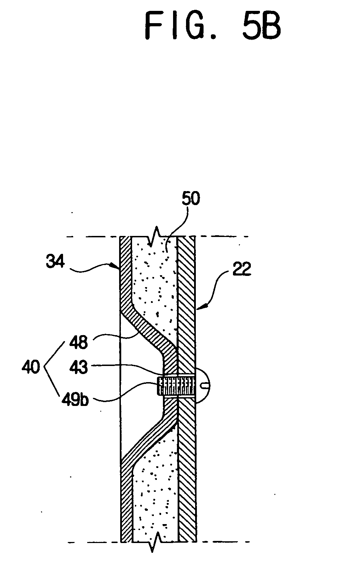

To more securely combine the frame 22 with the oven 30, as shown in FIG. 5B, preferably, on the side part 34 of the oven 30, the spacing part 40 protrudes towards the frame 22 to form a space in which the insulation member 50 is placed, wherein the spacing part 40 includes at least one second protruding part 48 formed with a second screw hole 43, and at least one second screw 49b passing through the frame 22 and inserted into the second screw hole 43 of the second protruding part 48.

The first and second protruding parts 46 and 48 can have a variety of structures as necessary. Further, the first and second screws 49a and 49b to be combined to the first and second protruding parts 46 and 48 can be substituted with various combining devices.

The insulation member 50 is made of mica, glass fiber, etc., and is employed to prevent passage of heat and electricity.

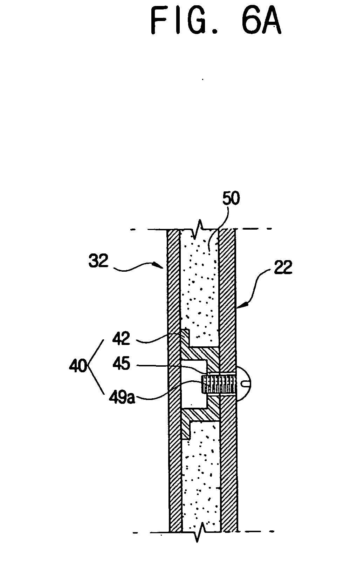

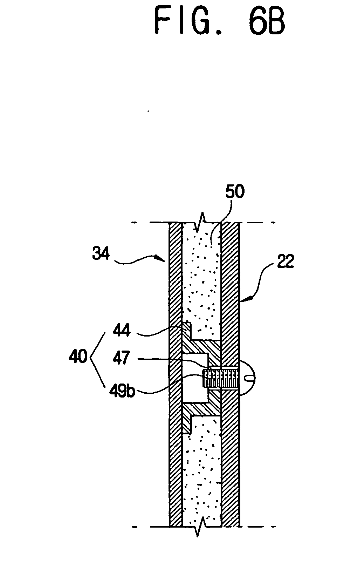

FIGS. 6A and 6B are partial sectional views to illustrate a combination structure of the main body and the oven in the bread maker according to another embodiment of the present invention. In this embodiment, brackets are used instead of the above-described protruding parts shown in FIGS. 3, 4, 5A and 5B.

As shown in FIG. 6A, on the rear part 32 of the oven 30, the spacing part 40 protrudes towards the frame 22 to form a space in which the insulation member 50 is inserted, wherein the spacing part 40 includes at least one first bracket 42 formed with a first screw hole 45, and at least one first screw 49a passing through the frame 22 and inserted into the first screw hole 45 of the first bracket 42.

To more securely combine the frame 22 with the oven 30, as shown in FIG. 6B, preferably, on the side part 34 of the oven 30, the spacing part 40 protrudes towards the frame 22 to form a space in which the insulation member 50 is inserted, wherein the spacing part 40 includes at least one second bracket 44 formed with a second screw hole 47, and at least one second screw 49b passing through the frame 22 and inserted into the second screw hole 47 of the second bracket 44.

As described above, preferred embodiments of the present invention provide a bread maker in which an insulation member is interposed between a main body and an oven, thereby preventing not only loss in heat and loss of electricity but also accidents caused due to a leakage current.

Further, preferred embodiments of the present invention provide a bread maker in which a main body and an oven are securely combined, thereby decreasing unnecessary moment of the bread maker to enhance the durability thereof.

Although a few embodiments of the present invention have been shown and described, it will be appreciated by those skilled in the art that changes may be made in these embodiments without departing from the principles and spirit of the invention, the scope of which is defined in the appended claims and their equivalents.

## Claims

1. A bread maker, comprising:
a main body (20) having an oven compartment (23);
an oven (30) including a rear part (32) and a side part (34) accommodated in the oven compartment (23) of the main body (20); **characterised in that** the bread maker further comprises a spacing part (40) provided between the main body (20) and the oven (30) to form a space between the main body (20) and the oven (30); and
an insulation member (50) interposed in the space between the main body (20) and the oven (30).

2. The bread maker according to claim 1, wherein the spacing part (46) protrudes towards the rear part (32) of the oven (30) to form the space in which the insulation member (50) is interposed;
at least one first protruding part (46) formed with a first screw hole (41); and
at least one first screw (49a) passing through the main body (20) and inserted into the first screw hole (41) of the respective first protruding part (46).

3. The bread maker according to claim 1 or claim 2, wherein the spacing part (40) protrudes towards the side part (34) of the oven (30) to form the space in which the insulation member (50) is interposed,
at least one second protruding part (48) formed with a second screw hole (43); and
at least one second screw (49b) passing through the main body (20) and inserted into the second screw hole (43) of the respective second protruding part (48).

4. The bread maker according to claim 1, wherein the spacing part (40) protrudes towards the rear part (32) of the oven (30) to form the space in which the insulation member (50) is interposed;
at least one first bracket (42) formed with a first screw hole (45); and
at least one first screw (49a) passing through the main body (20) and inserted into the first screw hole (45) of the respective first bracket (42).

5. The bread maker according to claim 1 or claim 4, wherein the spacing part (40) protrudes towards the side part (34) of the oven (30) to form the space in which the insulation member (50) is interposed,
at least one second bracket (44) formed with a second screw hole (47); and
at least one second screw (49b) passing through the main body (20) and inserted into the second screw hole(47) of the respective second bracket (44).

6. The bread maker according to claim 1, further comprising:
a frame (22) forming an oven compartment (23) of the main body (20); a frame cover (24) to cover the outside of the frame (22); and
a control panel (90) to allow a user to control the bread maker and to view an operating state of the bread maker.

7. The bread maker according to claim 6, wherein a side of the spacing part (40) is adjacent to the frame (22) of the oven (30) to form the space in which the insulation member (50) is interposed.

8. A bread maker, comprising:
an oven (30) including a rear part (32) and a side part (34); an oven compartment (23);
a frame (22) forming the oven compartment (23); and
a spacing part (40) provided between the frame (22) and the oven (30) to combine the frame (22) with the oven (30), and to form a predetermined space to interpose an insulation (50).

9. The bread maker according to claim 8, wherein the spacing part (40) protrudes towards the frame (22) to form a space in which the insulation member (50) is placed.

10. The bread maker according to claim 9, the spacing part (40) further comprising:
at least one first protruding part (46) formed with a first screw hole (41); and
at least one first screw (49a) passing through the main body (20) and inserted into the first screw hole (41) of the respective first protruding part (46).

11. The bread maker according to any one of claims 8 to 10, wherein on a side part (34) of the oven (30), the spacing part (40) protrudes towards the frame (22) to form a space in which the insulation member (50) is placed.

12. The bread maker according to claim 11, the spacing part (40) further comprising:
at least one second protruding part (48) formed with a second screw hole (43); and
at least one second screw (49b) passing through the main body (20) and inserted into the second screw hole (43) of the respective second protruding part (48).

13. A bread maker according to any one of claims 1 or 8-12, wherein the spacing part (40) includes at least one first bracket (42) formed with a first screw hole (41).

14. The bread maker according to claim 8, wherein the spacing part (40) protrudes towards the rear part (32) of the oven (30) to form the space in which the insulation member (50) is interposed;
at least one first bracket (42) formed with a first screw hole (41); and
at least one first screw (49a) passing through the main body (20) and inserted into the first screw hole (41) of the respective first protruding part (46).

15. The bread maker according to claim 14, wherein the spacing part (40) protrudes towards the side part (34) of the oven (30) to form the space in which the insulation member (50) is interposed,
at least one second bracket (44) formed with a second screw hole (47); and
at least one second screw (49b) passing through the main body (20) and inserted into the second screw hole (47) of the respective second protruding part (48).

## Patentansprüche

1. Brotbackmaschine, die umfasst:
einen Hauptkörper (20) mit einer Ofenkammer (23);
einen Ofen (30), der einen hinteren Teil (32) und einen seitlichen Teil (34) enthält, die in der Ofenkammer (23) des Hauptkörpers (23) aufgenommen sind; **dadurch gekennzeichnet, dass** die Brotbackmaschine des Weiteren einen Abstandshalteteil (40) umfasst, der zwischen dem Hauptkörper (20) und dem Ofen (3) vorhanden ist, um einen Zwischenraum zwischen dem Hauptkörper (20) und dem Ofen (30) zu bilden; und
ein Isolierelement (50), das in den Raum zwischen dem Hauptkörper (20) und dem Ofen (30) eingefügt ist.

2. Brotbackmaschine nach Anspruch 1, wobei der Abstandshalteteil (46) auf den hinteren Teil (32) des Ofens (30) zu vorsteht, um den Zwischenraum zu bilden, in den das Isolierelement (50) eingefügt ist;
wenigstens ein vorstehender Teil (46) mit einem ersten Schraubenloch (41) versehen ist; und
wenigstens eine erste Schraube (49a) durch den Hauptkörper (20) hindurchtritt und in das erste Schraubenloch (41) des entsprechenden ersten vorstehenden Teils (46) eingeführt ist.

3. Brotbackmaschine nach Anspruch 1 oder Anspruch 2, wobei der Abstandshalteteil (40) auf den seitlichen Teil (34) des Ofens (30) zu vorsteht, um den Zwischenraum zu bilden, in den das Isolierelement (50) eingefügt ist,
wenigstens ein vorstehender Teil (48) mit einem zweiten Schraubenloch (43) versehen ist; und
wenigstens eine zweite Schraube (49b) durch den Hauptkörper (20) hindurchtritt und in das zweite Schraubenloch (43) des entsprechenden zweiten vorstehenden Teils (48) eingeführt ist.

4. Brotbackmaschine nach Anspruch 1, wobei der Abstandshalteteil (40) auf den hinteren Teil (32) des Ofens (30) zu vorsteht, um den Zwischenraum zu bilden, in den das Isolierelement (50) eingefügt ist;
wenigstens eine erste Halterung (42) mit einem ersten Schraubenloch (45) versehen ist; und
wenigstens eine erste Schraube (49a) durch den Hauptkörper (20) hindurchtritt und in das erste Schraubenloch (45) der entsprechenden ersten Halterung (42) eingeführt ist.

5. Brotbackmaschine nach Anspruch 1 oder Anspruch 4, wobei der Abstandshalteteil (40) auf den seitlichen Teil (34) des Ofens (30) zu vorsteht, um den Zwischenraum zu bilden, in den das Isolierelement (50) eingefügt ist,
wenigstens einer zweite Halterung (44) mit einem zweiten Schraubenloch (47) versehen ist; und
wenigstens eine zweite Schraube (49b) durch den Hauptkörper (20) hindurchtritt und in das zweite Schraubenloch (47) der entsprechenden zweiten Halterung (44) eingeführt ist.

6. Brotbackmaschine nach Anspruch 1, die des Weiteren umfasst:
einen Rahmen (22), der eine Ofenkammer (23) des Hauptkörpers (20) bildet; eine Rahmenabdeckung (24), die die Außenseite des Rahmens (22) abdeckt; und
ein Bedienfeld (90), das es einem Benutzer ermöglicht, die Brotbackmaschine zu bedienen und einen Betriebszustand der Brotbackmaschine zu sehen.

7. Brotbackmaschine nach Anspruch 6, wobei eine Seite des Abstandshalteteils (40) an den Rahmen (22) des Ofens (30) angrenzt, um den Zwischenraum zu bilden, in den das Isolierelement (50) eingefügt ist.

8. Brotbackmaschine, die umfasst:
einen Ofen (30), der einen hinteren Teil (32) und einen seitlichen Teil (34) enthält;
eine Ofenkammer (23);
einen Rahmen (22), der die Ofenkammer (23) bildet; und
einen Abstandshalteteil (40), der zwischen dem Rahmen (22) und dem Ofen (30) vorhanden ist, um den Rahmen (22) mit dem Ofen (30) zu verbinden und einen vorgegebenen Zwischenraum zum Einfügen einer Isolierung (50) zu bilden.

9. Brotbackmaschine nach Anspruch 8, wobei der Abstandshalteteil (40) auf den Rahmen (22) zu vorsteht, um einen Zwischenraum zu bilden, in den das Isolierelement (50) eingesetzt wird.

10. Brotbackmaschine nach Anspruch 9, wobei der Abstandshalteteil (40) des Weiteren umfasst:
wenigstens einen ersten vorstehenden Teil (46), der mit einem ersten Schraubenloch (41) versehen ist; und
wenigstens eine erste Schraube (49a), die durch den Hauptkörper (20) hindurchtritt und in das erste Schraubenloch (41) des entsprechenden ersten vorstehenden Teils (46) eingeführt ist.

11. Brotbackmaschine nach einem der Ansprüche 8 bis 10, wobei an einem seitlichen Teil (34) des Ofens (30) der Abstandshalteteil (40) auf den Rahmen (22) zu vorsteht, um einen Zwischenraum zu bilden, in den das Isolierelement (50) eingesetzt wird.

12. Brotbackmaschine nach Anspruch 11, wobei der Abstandshalteteil (40) des Weiteren umfasst:
wenigstens einen zweiten vorstehenden Teil (48), der mit einem zweiten Schraubenloch (43) versehen ist; und
wenigstens eine zweite Schraube (49b), die durch den Hauptkörper (20) hindurchtritt und in das zweite Schraubenloch (43) des entsprechenden zweiten vorstehenden Teils (48) eingeführt ist.

13. Brotbackmaschine nach einem der Ansprüche 1 oder 8 - 12, wobei der Abstandshalteteil (40) wenigstens eine erste Halterung (42) enthält, die mit einem ersten Schraubenloch (41) versehen ist.

14. Brotbackmaschine nach Anspruch 8, wobei der Abstandshalteteil (40) auf den hinteren Teil (32) des Ofens (30) zu vorsteht, um den Raum zu bilden, in den das Isolierelement (50) eingefügt wird;
wenigstens eine erste Halterung (42) mit einem ersten Schraubenloch (41) versehen ist; und
wenigstens eine erste Schraube (49a) durch den Hauptkörper (20) hindurchtritt und in das erste Schraubenloch (41) des entsprechenden ersten vorstehenden Teils (46) eingeführt ist.

15. Brotbackmaschine nach Anspruch 14, wobei der Abstandshalteteil (40) auf den seitlichen Teil (34) des Ofens (30) zu vorsteht, um den Raum zu bilden, in den das Isolierelement (50) eingefügt wird,
wenigstens eine zweite Halterung (44) mit einem zweiten Schraubenloch (47) versehen ist; und
wenigstens eine zweite Schraube (49b) durch den Hauptkörper (20) hindurchtritt und in das zweite Schraubenloch (47) des entsprechenden zweiten vorstehenden Teils (48) eingeführt ist.

## Revendications

1. Machine à pain, comprenant :
un corps principal (20) ayant un compartiment de four (23),
un four (30) comportant une partie arrière (32) et une partie latérale (34) agencé dans le compartiment de four (23) du corps principal (20), **caractérisée en ce que** la machine à pain comporte en outre une partie d'espacement (40) agencée entre le corps principal (20) et le four (30) pour former un espace entre le corps principal (20) et le four (30), et
un élément d'isolation (50) interposé dans l'espace entre le corps principal (20) et le four (30).

2. Machine à pain selon la revendication 1, dans laquelle la partie d'espacement (46) fait saillie vers la partie arrière (32) du four (30) pour former l'espace dans lequel l'élément d'isolation (50) est interposé,
au moins une première partie faisant saillie (46) est formée avec un premier trou de vis (41), et
au moins une première vis (49a) passant à travers le corps principal (20), et insérée dans le premier trou de vis (41) de la première partie faisant saillie respective (46).

3. Machine à pain selon la revendication 1 ou 2, dans laquelle la partie d'espacement (40) fait saillie vers la partie latérale (34) du four (30) pour former l'espace dans lequel l'élément d'isolation (50) est interposé,
au moins une seconde partie faisant saillie (48) est formée avec un second trou de vis (43), et
au moins une seconde vis (49b) passant à travers le corps principal (20), et insérée dans le second trou de vis (43) de la seconde partie faisant saillie respective (48).

4. Machine à pain selon la revendication 1, dans laquelle la partie d'espacement (40) fait saillie vers la partie arrière (32) du four (30) pour former l'espace dans lequel l'élément d'isolation (50) est interposé,
au moins un premier étrier (42) est formé avec un premier trou de vis (45), et
au moins une première vis (49a) passant à travers le corps principal (20), et est insérée dans le premier trou de vis (45) du premier support respectif (42).

5. Machine à pain selon la revendication 1 ou 4, dans laquelle la partie d'espacement (40) fait saillie vers la partie latérale (34) du four (30) pour former un espace dans lequel l'élément d'isolation (50) est interposé,
au moins un second support (44) est formé avec un second trou de vis (47), et
au moins une seconde vis (49b) passant à travers le corps principal (20), et insérée dans le second trou de vis (47) du second support respectif (44).

6. Machine à pain selon la revendication 1, comprenant en outre :
un cadre (22) formant un compartiment de four (23) du corps principal (20) ; une enveloppe de cadre (24) pour couvrir l'extérieur du cadre (22) ; et
un panneau de commande (90) pour permettre à un utilisateur de commander la machine à pain, et de voir un état de fonctionnement de la machine à pain.

7. Machine à pain selon la revendication 6, dans laquelle un côté de la partie d'espacement (40) est adjacent au cadre (22) du four (30) pour former l'espace dans lequel l'élément d'isolation (50) est interposé.

8. Machine à pain, comprenant :
un four (30) comportant une partie arrière (32) et une partie latérale (34) ; un compartiment de four (23) ;
un cadre (22) formant le compartiment de four (23) ; et,
une partie d'espacement (40) agencée entre le cadre (22) et le four (30) pour combiner le cadre (22) avec le four (30), et pour former un espace prédéterminé pour interposer un isolant (50).

9. Machine à pain selon la revendication 8, dans laquelle la partie d'espacement (40) fait saillie vers le cadre (22) pour former un espace dans lequel l'élément d'isolation (50) est placé.

10. Machine à pain selon la revendication 9, la partie d'espacement (40) comprenant en outre :
au moins une première partie faisant saillie (46) formée avec un premier trou de vis (41) ; et
au moins une première vis (49a) passant à travers le corps principal (20), et insérée dans le premier trou de vis (41) de la première partie faisant saillie respective (46).

11. Machine à pain selon l'une quelconque des revendications 8 à 10, dans laquelle sur une partie latérale (34) du four (30), la partie d'espacement (40) fait saillie vers le cadre (22) pour former un espace dans lequel l'élément d'isolation (50) est placé.

12. Machine à pain selon la revendication 11, la partie d'espacement (40) comprenant en outre :
au moins une seconde partie faisant saillie (48) formée avec un second trou de vis (43) ; et
au moins une seconde vis (49b) passant à travers le corps principal (20), et insérée dans le second trou de vis (43) de la seconde partie faisant saillie respective (48).

13. Machine à pain selon l'une quelconque des revendications 1 ou 8 à 12, dans laquelle la partie d'espacement (40) comporte au moins un premier support (42) formé avec un premier trou de vis (41).

14. Machine à pain selon la revendication 8, dans laquelle la partie d'espacement (40) fait saillie vers la partie arrière (32) du four (30) pour former l'espace dans lequel l'élément d'isolation (50) est interposé ;
au moins un premier support (42) formé avec un premier trou de vis (41);et
au moins une première vis (49a) passant à travers le corps principal (20), et insérée dans le premier trou de vis (41) de la première partie faisant saillie respective (46).

15. Machine à pain selon la revendication 14, dans laquelle la partie d'espacement (40) fait saillie vers la partie latérale (34) du four (30) pour former l'espace dans lequel l'élément d'isolation (50) est interposé,
au moins un second support (44) formé avec un second trou de vis (47); et
au moins une seconde vis (49b) passant à travers le corps principal (20), et insérée dans le second trou de vis (47) de la seconde partie faisant saillie respective (48).
